# EUROPEAN PATENT APPLICATION

(11) **EP 4 737 207 A1**
(43) Date of publication of application: **06.05.2026**
(21) Application number: 24861607.0
(22) Date of filing: 21.06.2024
(51) Int. Cl.: B60N 2/28

(54) **RETRACTABLE SUPPORT LEG STRUCTURE AND CHILD SAFETY SEAT**

(30) Priority: 07.09.2023 CN 202322431180 U
(71) Applicant: Max-Inf (Ningbo) Baby Product Co., Ltd, Ningbo, Zhejiang 315000 (CN)
(72) Inventor: LIU, Jianchun, Ningbo, Zhejiang 315000 (CN); JI, Xuewei, Ningbo, Zhejiang 315000 (CN)
(74) Representative: Santarelli
(86) International application number: PCT/CN2024/100579
(87) International publication number: WO 2025/050761

(57) **Abstract**

This disclosure provides a telescopic support leg structure and a child safety seat, including an outer tube and an inner tube that are slidably connected to each other. The outer tube is equipped with a locking assembly, which includes a locking block and a locking latch and an unlocking button that are movably connected to the locking block. The unlocking button is connected to the locking latch, and the inner tube has multiple positioning holes suitable for engaging with the locking latch. When the unlocking button moves relative to the locking block, it drives the locking latch to translate, thereby disengaging or engaging the locking latch with the positioning holes. This disclosure achieves the mutual locking or unlocking of the inner tube and outer tube by driving the locking latch to translate through the unlocking button, thus enabling the adjustment of the support leg length. The locking latch uses a translational method to switch its engagement state with the positioning holes, allowing the width of the positioning holes in the vertical direction to be made as small as possible. This results in a smaller gap between the locking latch and the inner wall of the positioning holes, therefore reducing the wobbling between the inner tube and outer tube and making it less likely to slip out of position.

## Description

### Technical Field

This disclosure relates to the field of automotive safety products technology, specifically to a telescopic support leg structure and child safety seat.

### Background of the Invention

Some child safety seats on the market are designed with support legs that have adjustable lengths, which is achieved by adjusting the relative position of the inner tube and outer tube of the support leg. However, in existing technology, the locking assembly between the inner tube and outer tube achieves unlocking or locking through rotational movement. The opening of the positioning holes on the inner tube that cooperate with the locking assembly is relatively large, which leads to easy wobbling between the inner tube and outer tube.

### Summary of the Invention

To solve at least one aspect of the above problems, this disclosure first provides a telescopic support leg structure, including an outer tube and an inner tube that are slidably connected. The outer tube is equipped with a locking assembly, which includes a locking block and a locking latch and unlocking button that are movably connected to the locking block. The unlocking button is connected to the locking latch, and the inner tube has multiple positioning holes suitable for cooperating with the locking latch. When the unlocking button moves relative to the locking block, it drives the locking latch to translate, thus achieving disengagement or engagement between the locking latch and the positioning holes.

Optionally, the outer tube is a plastic component, and the inner tube is a metal component or plastic component or a metal-plastic composite component.

Optionally, the unlocking button is movably connected to the locking block. The unlocking button has a connecting block, and the locking latch has a through hole that is movably connected to the connecting block. The locking block has a channel that allows the locking latch to move back and forth.

Optionally, a first resetting member is provided between the unlocking button and the locking block. One end of the first resetting member is connected to the end of the unlocking button away from the connecting block, and the other end of the first resetting member is connected to the locking block.

Optionally, flanged edges are provided on both the left and right sides of the locking latch, and the channel has guiding holes that cooperate with the flanged edges for front and back sliding.

Optionally, a second limiting screw is connected to the upper end of the inner tube, and the locking block has a step suitable for abutting against the second limiting screw.

Optionally, a foot pad is connected to the lower end of the inner tube.

Optionally, a second resetting member is provided between the locking block and the outer tube. The two ends of the second resetting member are connected to the outer tube and the locking block respectively. The locking block is vertically movably connected to the outer tube. The locking block has vertically arranged first state indicator and second state indicator, and the outer tube has a display window. When the inner tube is not in a supporting state, the locking block moves downward under the force of the second resetting member, and at this time, the display window correspondingly shows the first state indicator. When the inner tube is in a supporting state, the locking block moves upward under the supporting force, and at this time, the display window correspondingly shows the second state indicator.

Optionally, the outer tube is connected with a first limiting screw used to define the position of the locking block. When the inner tube is not in a supporting state, the locking block moves downward under the force of the second resetting member and abuts against the first limiting screw. When the inner tube is in a supporting state, the locking block moves upward under the supporting force and separates from the first limiting screw.

Compared to the existing technology, the telescopic support leg structure in this disclosure achieves locking or unlocking between the inner tube and outer tube by the unlocking button driving the locking latch to translate, thereby adjusting the length of the support leg. The locking latch uses translation to switch its engagement state with the positioning holes, allowing the vertical width of the positioning holes to be made as small as possible. This results in a smaller gap between the locking latch and the inner wall of the positioning holes, thus reducing wobbling between the inner tube and outer tube and making slippage less likely to occur.

Additionally, this disclosure provides a child safety seat that includes the aforementioned telescopic support leg structure.

Compared to the prior art, the child safety seat of this disclosure has the same advantages as the aforementioned telescopic support leg structure compared to the existing technology, which will not be repeated here.

### Brief Description of the Drawings

Figure 1 is a partial exploded view of the telescopic support leg structure of this disclosure's embodiment;
Figure 2 is a structural diagram of the telescopic support leg structure of this disclosure's embodiment;
Figure 3 is a partial sectional view of the telescopic support leg structure of this disclosure's embodiment when not in a supporting state;
Figure 4 is a partial sectional view of the telescopic support leg structure of this disclosure's embodiment during unlocking;
Figure 5 is the first partial sectional view of the telescopic support leg structure of this disclosure's embodiment in a supporting state;
Figure 6 is the second partial sectional view of the telescopic support leg structure of this disclosure's embodiment in a supporting state;
Figure 7 is a sectional view of the telescopic support leg structure of this disclosure's embodiment when not in a supporting state;
Figure 8 is an enlarged view of part A in Figure 7;
Figure 9 is a sectional view when the inner tube of this disclosure's embodiment is pulled to the lowest position.

### Reference numerals:

1 - outer tube; 11 - display window; 2 - inner tube; 21 - positioning hole; 3 - locking assembly; 31 - locking block; 311 - channel; 3111 - guiding hole; 312 - step; 313 - first state indicator; 314 - second state indicator; 32 - locking latch; 321 - through hole; 322 - flanged edge; 33 - unlocking button; 331 - connecting block; 34 - first resetting member; 4 - second limiting screw; 5 - foot pad; 6 - second resetting member; 7 - first limiting screw.

### Detailed Description of Embodiments

To make the above objectives, features, and advantages of this disclosure more apparent and easier to understand, the specific embodiments of this disclosure will be described in detail with reference to the accompanying drawings.

In the description of this disclosure, it should be understood that terms such as "up" and "down" indicate orientations or positional relationships based on the normal use of the product.

The terms "first" and "second" are used only for descriptive purposes and should not be understood as indicating or implying relative importance or implicitly specifying the number of technical features indicated. Thus, features defined as "first" and "second" may explicitly or implicitly include at least one such feature. In the drawings of the embodiments of this disclosure, a coordinate system XYZ is set up, where the positive direction of the X-axis represents the left, the negative direction of the X-axis represents the right, the positive direction of the Y-axis represents the front, the negative direction of the Y-axis represents the back, the positive direction of the Z-axis represents up, and the negative direction of the Z-axis represents down.

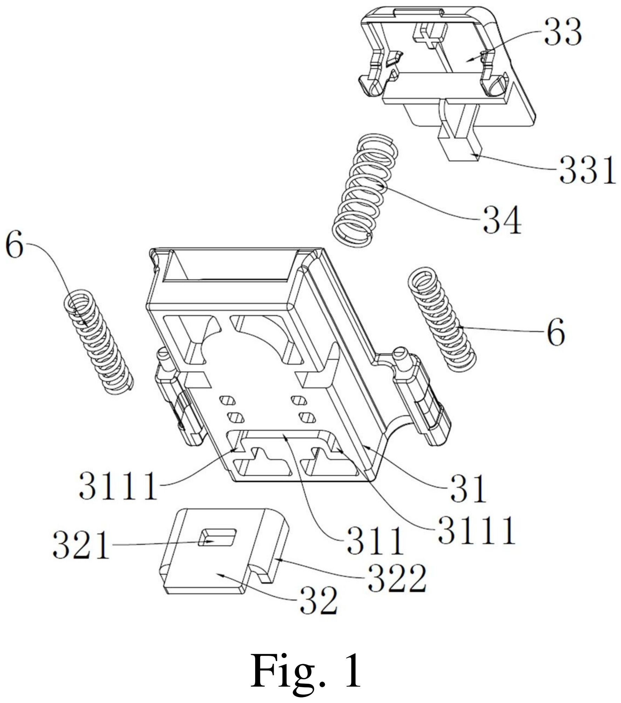

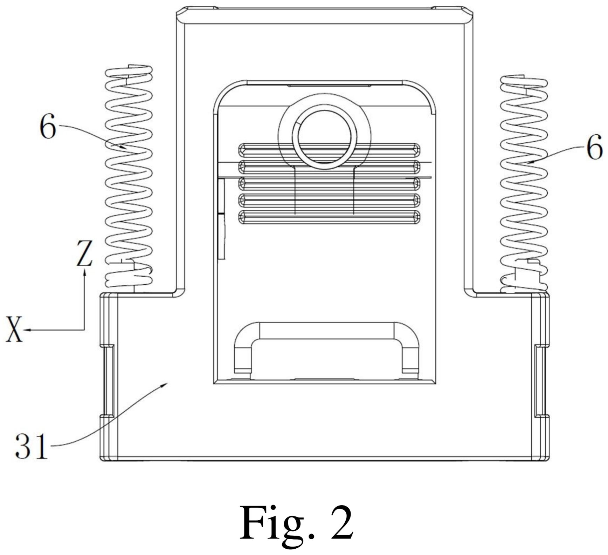

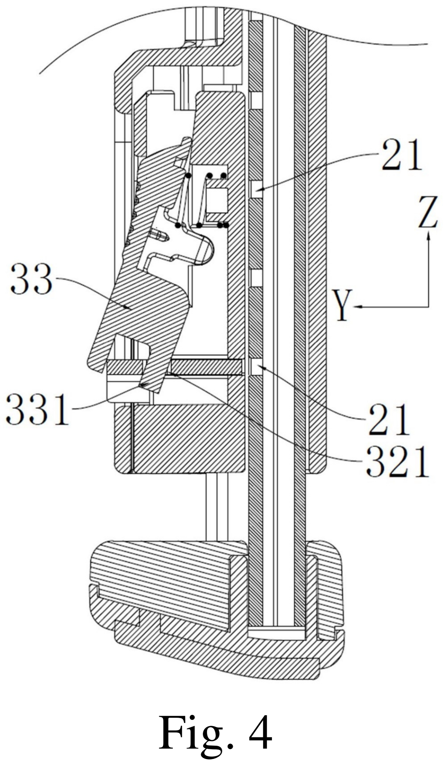

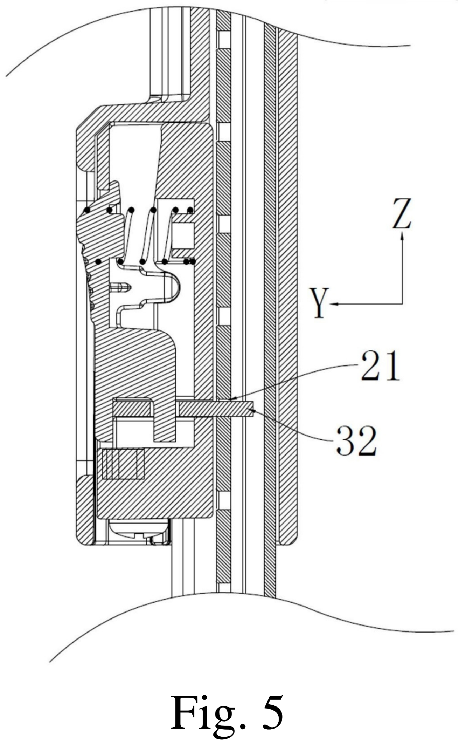

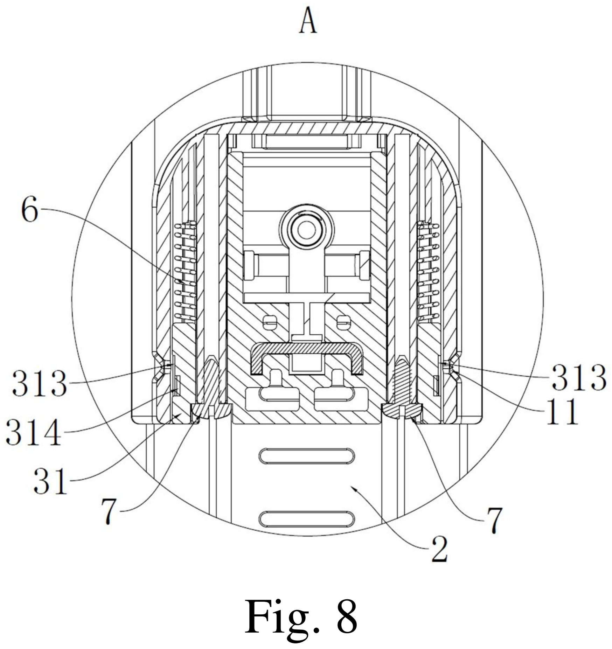

The embodiment of this disclosure provides a telescopic support leg structure. As shown in Figures 1 to 8, it includes an outer tube 1 and an inner tube 2 that are slidably connected. The outer tube 1 is equipped with a locking assembly 3. The locking assembly 3 includes a locking block 31 and a locking latch 32 and unlocking button 33 that are movably connected to the locking block 31. The unlocking button 33 is connected to the locking latch 32, and the inner tube 2 has multiple positioning holes 21 suitable for cooperating with the locking latch 32. When the unlocking button 33 moves relative to the locking block 31, the unlocking button 33 drives the locking latch 32 to translate, thus achieving disengagement or engagement between the locking latch 32 and the positioning holes 21.

When the unlocking button 33 is subjected to external force, it can either rotate or translate relative to the locking block 31; when the unlocking button 33 moves, it drives the locking latch 32 to translate horizontally. The depth direction of the positioning holes 21 is in the horizontal direction, and multiple positioning holes 21 are spaced apart. When locked, one of the multiple positioning holes 21 engages with the locking latch 32. The thickness of the locking latch 32 in the up and down direction is similar to the width of the positioning holes 21 in the up and down direction, allowing the locking latch 32 to move freely within the positioning holes 21. When adjusting the length of the support leg is needed, press the unlocking button 33, which drives the locking latch 32 to translate, disengaging the locking latch 32 from the positioning holes 21, thus unlocking the inner tube 2 and outer tube 1. At this time, the length of the support leg can be adjusted. When adjusted to the appropriate position, release the unlocking button 33, and the locking latch 32 translates back to engage with the positioning holes 21, locking the inner tube 2 and outer tube 1 together. At this point, the length of the support leg is fixed and can provide support.

In this embodiment of the telescopic support leg structure, the unlocking button 33 drives the locking latch 32 to translate, achieving locking or unlocking between the inner tube 2 and outer tube 1, thereby adjusting the length of the support leg. The locking latch 32 uses translation to switch its engagement state with the positioning holes 21, allowing the vertical width of the positioning holes 21 to be made as small as possible. This results in a smaller gap between the locking latch 32 and the inner wall of the positioning holes 21, thus reducing wobbling between the inner tube 2 and outer tube 1 and making slippage less likely to occur.

Optionally, the outer tube 1 is a plastic component, and the inner tube 2 is a metal component, which ensures the strength requirements of the support leg while reducing product weight and cost. The plastic outer tube 1 is designed as a one-piece injection molding, greatly reducing manual assembly and component costs. During use, the friction noise between the plastic outer tube 1 and metal inner tube 2 is smaller, and it also eliminates the need for plastic rings to reduce friction noise, further improving production efficiency. In addition, the inner tube 2 can also be a plastic component, or a metal-plastic composite component, meaning the inner tube 2 contains both metal and plastic materials.

Optionally, as shown in Figures 1 to 8, the unlocking button 33 is movably connected to the locking block 31. The unlocking button 33 has a connecting block 331, and the locking latch 32 has a through hole 321 that is movably connected to the connecting block 331. The locking block 31 has a channel 311 that allows the locking latch 32 to move back and forth.

Specifically, the unlocking button 33 is rotatably connected to the locking block 31 via a pivot shaft; the length direction of the channel 311 aligns with the front-back direction; the length direction of the through hole 321 aligns with the up-down direction, and the width of the through hole 321 in the front-back direction is greater than the width of the connecting block 331 in the front-back direction. This allows the connecting block 331 to tilt and move in and out of the through hole 321 when the unlocking button 33 rotates relative to the locking block 31, thereby driving the locking latch 32 to move back and forth within the channel 311, resulting in a simple and reliable structure.

Optionally, as shown in Figures 1, 3, 4, and 5, a first resetting member 34 is provided between the unlocking button 33 and the locking block 31. One end of the first resetting member 34 is connected to the end of the unlocking button 33 away from the connecting block 331, and the other end of the first resetting member 34 is connected to the locking block 31. The first resetting member 34 is preferably a compression spring. When the unlocking button 33 is pressed to drive the locking latch 32 to translate, disengaging the locking latch 32 from the positioning hole 21, the first resetting member 34 is in a compressed state. When the unlocking button 33 is released, under the spring force of the first resetting member 34, the locking latch 32 automatically translates back to engage with the positioning hole 21, making operation convenient.

Optionally, as shown in Figures 1, 6, 7, and 8, flanged edges 322 are provided on both the left and right sides of the locking latch 32, and the channel 311 has guiding holes 3111 that cooperate with the flanged edges 322 for front and back sliding. The flanged edges 322 extend downward from the left and right sides of the locking latch 32, preventing the locking latch 32 from moving left and right within the channel 311. This ensures that the locking latch 32 can move stably back and forth within the channel 311, thereby ensuring the stability and reliability of the locking or unlocking operation between the inner tube 2 and outer tube 1.

Optionally, as shown in Figures 1 to 8, a second resetting member 6 is provided between the locking block 31 and the outer tube 1. The two ends of the second resetting member 6 are connected to the outer tube 1 and the locking block 31 respectively. The locking block 31 is vertically movably connected to the outer tube 1. The locking block 31 has vertically arranged first state indicator 313 and second state indicator 314, and the outer tube 1 has a display window 11. When the inner tube 2 is not in a supporting state, the locking block 31 moves downward under the force of the second resetting member 6, and at this time, the display window 11 correspondingly shows the first state indicator 313. When the inner tube 2 is in a supporting state, the locking block 31 moves upward under the supporting force, and at this time, the display window 11 correspondingly shows the second state indicator 314.

Among them, the second resetting member 6 is preferably a compression spring, and there are two second resetting members 6, positioned on the left and right sides of the locking block 31 respectively; the first state indicator 313 is red, indicating that the support leg is not in a supporting state, while the second state indicator 314 is green, indicating that the support leg is in a supporting state, allowing users to quickly and accurately check the actual state of the support leg.

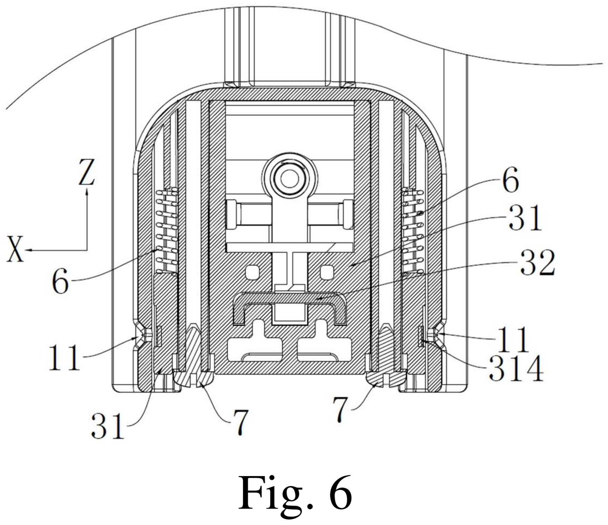

Optionally, as shown in Figures 6, 7, and 8, the outer tube 1 is connected with a first limiting screw 7 used to define the position of the locking block 31. When the inner tube 2 is not in a supporting state, the locking block 31 moves downward under the force of the second resetting member 6 and abuts against the first limiting screw 7. When the inner tube 2 is in a supporting state, the locking block 31 moves upward under the supporting force and separates from the first limiting screw 7. There are two first limiting screws 7. The presence of the first limiting screw 7 prevents the locking block 31 from separating from the outer tube 1, ensuring structural stability. The design allowing vertical movement between the first limiting screw 7 and the locking block 31 enables the display window 11 to show different state indicators under different states of the support leg.

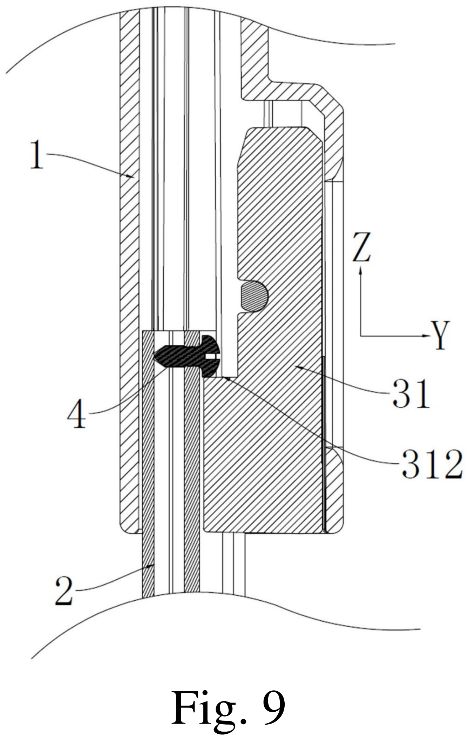

Optionally, as shown in Figure 9, the upper end of the inner tube 2 is connected with a second limiting screw 4, and the locking block 31 has a step 312 suitable for abutting against the second limiting screw 4. When the inner tube 2 is pulled to the lowest position relative to the outer tube 1, the second limiting screw 4 abuts against the step 312 of the locking block 31, preventing the inner tube 2 from falling out of the outer tube 1.

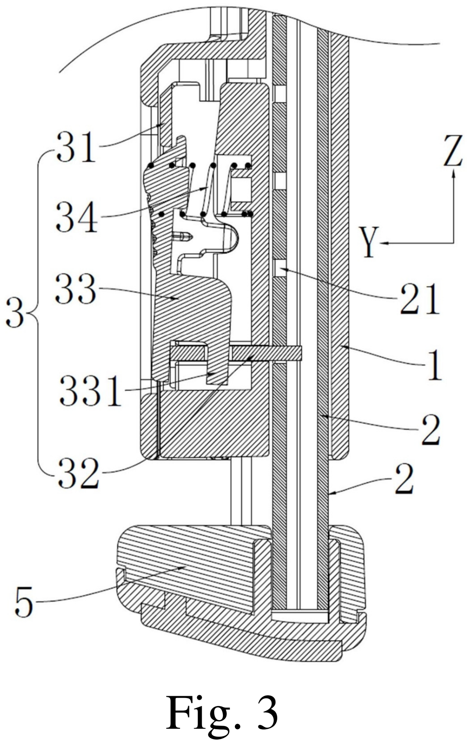

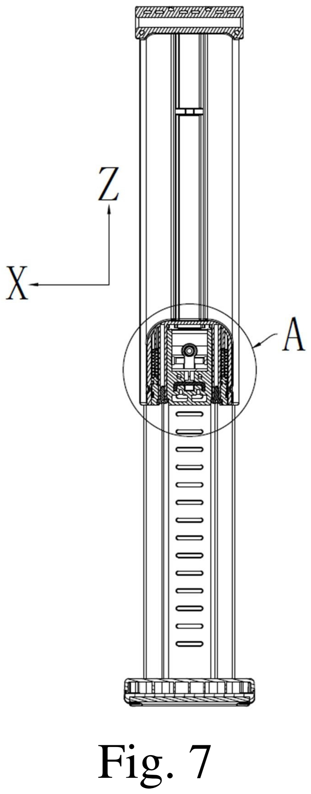

Optionally, as shown in Figures 3 and 7, the lower end of the inner tube 2 is connected with a foot pad 5. The foot pad 5 is preferably a plastic component, which can prevent the metal inner tube 2 from injuring users or the car, and it also increases the contact area between the support leg and the car, reducing pressure.

Another embodiment of this disclosure provides a child safety seat that includes the aforementioned telescopic support leg structure.

In this embodiment of the child safety seat, the unlocking button 33 drives the locking latch 32 to translate, achieving locking or unlocking between the inner tube 2 and outer tube 1, thereby adjusting the length of the support leg. The locking latch 32 uses translation to switch its engagement state with the positioning holes 21, allowing the vertical width of the positioning holes 21 to be made as small as possible. This results in a smaller gap between the locking latch 32 and the inner wall of the positioning holes 21, thus reducing wobbling between the inner tube 2 and outer tube 1 and making slippage less likely to occur.

Although this disclosure has been described as above, the scope of protection of this disclosure is not limited to this. Those skilled in the art can make various changes and modifications without departing from the spirit and scope of this disclosure, and these changes and modifications will all fall within the scope of protection of this disclosure.

## Claims

1. A telescopic support leg structure, **characterized in that** it comprises an outer tube (1) and an inner tube (2) slidably connected to each other, wherein a locking assembly (3) is provided inside the outer tube (1), the locking assembly (3) includes a locking block (31) and a locking latch (32) and an unlocking button (33) movably connected to the locking block (31), the unlocking button (33) is connected to the locking latch (32), the inner tube (2) is provided with multiple positioning holes (21) suitable for cooperating with the locking latch (32); when the unlocking button (33) moves relative to the locking block (31), the unlocking button (33) drives the locking latch (32) to translate, so as to disengage or engage the locking latch (32) with the positioning hole (21).

2. The telescopic support leg structure according to claim 1, **characterized in that** the outer tube (1) is a plastic part, and the inner tube (2) is a metal part or a plastic part or a metal-plastic composite part.

3. The telescopic support leg structure according to claim 1, **characterized in that** the unlocking button (33) is pivotally connected to the locking block (31), the unlocking button (33) is provided with a connecting block (331), the locking latch (32) is provided with a through hole (321) movably connected to the connecting block (331), and the locking block (31) is provided with a channel (311) for the locking latch (32) to move back and forth.

4. The telescopic support leg structure according to claim 3, **characterized in that** a first resetting member (34) is provided between the unlocking button (33) and the locking block (31), one end of the first resetting member (34) is connected to the end of the unlocking button (33) away from the connecting block (331), and the other end of the first resetting member (34) is connected to the locking block (31).

5. The telescopic support leg structure according to claim 3, **characterized in that** the left and right sides of the locking latch (32) are both provided with flanged edges (322), and the channel (311) is provided with guiding holes (3111) that slidably cooperate with the flanged edges (322) in the front-back direction.

6. The telescopic support leg structure according to claim 1, **characterized in that** the upper end of the inner tube (2) is connected to a second limiting screw (4), and the locking block (31) is provided with a step (312) suitable for abutting against the second limiting screw (4).

7. The telescopic support leg structure according to claim 1, **characterized in that** the lower end of the inner tube (2) is connected to a foot pad (5).

8. The telescopic support leg structure according to any one of claims 1-7, **characterized in that** a second resetting member (6) is provided between the locking block (31) and the outer tube (1), the two ends of the second resetting member (6) are connected to the outer tube (1) and the locking block (31) respectively, the locking block (31) is movably connected to the outer tube (1) in the up-down direction, the locking block (31) is provided with vertically arranged first state indicator (313) and second state indicator (314), the outer tube (1) is provided with a display window (11); when the inner tube (2) is not in a supporting state, the locking block (31) moves downward under the force of the second resetting member (6), at this time the display window (11) correspondingly shows the first state indicator (313); when the inner tube (2) is in a supporting state, the locking block (31) moves upward under the supporting force, at this time the display window (11) correspondingly shows the second state indicator (314).

9. The telescopic support leg structure according to claim 8, **characterized in that** the outer tube (1) is connected to a first limiting screw (7) used to define the position of the locking block (31), when the inner tube (2) is not in a supporting state, the locking block (31) moves downward under the force of the second resetting member (6) and abuts against the first limiting screw (7); when the inner tube (2) is in a supporting state, the locking block (31) moves upward under the supporting force and separates from the first limiting screw (7).

10. A child safety seat, **characterized in that** it includes the telescopic support leg structure according to any one of claims 1-9.
